# EUROPEAN PATENT APPLICATION

(11) **EP 4 746 139 A1**
(43) Date of publication of application: **20.05.2026**
(21) Application number: 25735792.1
(22) Date of filing: 11.02.2025
(51) Int. Cl.: H01M 50/14, H01M 50/209, H01M 50/593

(54) **BATTERY, BATTERY MODULE AND ELECTRIC APPARATUS**

(30) Priority: 29.08.2024 CN 202422120526 U
(71) Applicant: Eve Power Co., Ltd., Jingmen, Hubei 448000 (CN)
(72) Inventor: GUI, Ke, Jingmen, Hubei 448000 (CN); LI, Qiuping, Jingmen, Hubei 448000 (CN); ZHU, Pengxiang, Jingmen, Hubei 448000 (CN); CHEN, Xianyang, Jingmen, Hubei 448000 (CN); SUN, Fei, Jingmen, Hubei 448000 (CN)
(74) Representative: Berggren Oy
(86) International application number: PCT/CN2025/076797
(87) International publication number: WO 2026/045131

(57) **Abstract**

This application provides a battery and a battery module. The battery module includes a plurality of batteries and a structural adhesive. Each battery includes a battery cell and an insulating layer. The insulating layer is arranged on a side of the battery cell. One or more openings are formed in the insulating layer. The insulating layer in the one or more openings is less in thickness than other parts of the insulating layer. The structural adhesive is arranged on a surface of the battery cell, and is located in at least one of the one or more openings, and the battery and a component adjacent to battery are connected by the structural adhesive.

## Description

This application claims the priority to and benefit of Chinese Patent Application No. 202422120526.5, filed with China Patent Office on August 29, 2024, the entire contents of which is incorporated herein by reference.

### TECHNICAL FIELD

The present application relates to the technical field of battery, and in particular to a battery, a battery module and an electrical apparatus.

### BACKGROUND

Lithium batteries have the advantages of small size, high energy density, long service life, and green environmental protection. They are widely used in industries such as automobiles, electronic products, and energy storage systems.

In the related technology, a protective layer is wrapped around the outside of the battery cell, which not only improves the appearance of the battery, but more importantly, when multiple batteries are connected in series/parallel to form a battery module, the insulating film can prevent short circuits between adjacent batteries.

### SUMMARY

When wrapping the battery with an insulating layer, a circular wrapping method is usually adopted. However, this wrapping method produces a large repeated coverage area on the bottom or side of the battery. In addition, in order to facilitate connection, the batteries are connected with a glue layer, resulting in poor heat dissipation effect of the battery module.

In a first aspect, the present application provides a battery module. The battery module includes:
a plurality of batteries, each including a battery cell and an insulating layer, the insulating layer being arranged on a side of the battery cell, the insulating layer being formed with at least one opening, a thickness of the insulating layer in the opening being smaller than a thickness of other parts of the insulating layer;
a structural adhesive, arranged on a surface of the battery cell, and located in the opening, and each battery and adjacent components to the battery are connected by the structural adhesive.

In a second aspect, the present application provides a battery, which includes a battery cell and an insulating layer, wherein the insulating layer is disposed on a surface of the battery cell, and at least one opening is formed on the insulating layer, and the opening is used to accommodate a structural adhesive.

In a third aspect, the present application further provides an electrical apparatus. The electrical apparatus includes a battery module, and the battery module includes:
a plurality of batteries, each including a battery cell and an insulating layer, the insulating layer being arranged on a side of the battery cell, the insulating layer being formed with at least one opening, a thickness of the insulating layer in the opening being smaller than a thickness of other parts of the insulating layer;
a structural adhesive, arranged on a surface of the battery cell, and located in the opening, and each battery and adjacent components to the battery are connected by the structural adhesive.

### BENEFICIAL EFFECTS

In the technical solutions of the present application, an insulating layer is provided on the side of the battery cell, and the insulating layer is used to protect the battery cell to avoid contact between two adjacent battery cells, and prevent the problem of short circuit between adjacent batteries. An opening is provided on the insulating layer, and a structural adhesive is provided at the opening. The structural adhesive is used to connect two batteries, or to connect a battery with components adjacent to the battery. The structural adhesive is provided at the opening, which can effectively avoid an extra layer of structure in the middle, and the structure of the battery module is simple, the control parameters are reduced, and the bonding stability is improved. It can avoid the thickness of the local area of the battery module being too thick, avoid heat concentration, improve the heat dissipation efficiency, and increase the capacity of the battery module.

### BRIEF DESCRIPTION OF THE DRAWINGS

FIG. 1 is a schematic structural diagram of a battery according to some embodiments of the present application.
FIG. 2 is a side view of FIG. 1.
FIG. 3 is a partial enlarged view of region A in FIG. 2.
FIG. 4 is a schematic diagram of the insulation layer spraying process according to the present application.

List of reference numerals:
100, battery; 101, battery cell; 102, insulation layer; 103, first portion; 104, second portion; 105, opening; 106, pole; 107, explosion-proof valve; 108, mark; a, nozzle.

### DETAILED DESCRIPTION OF THE EMBODIMENTS

### Embodiment 1

In the related technology, a protective layer is wrapped around the outside of the battery cell, which not only improves the appearance of the battery, but more importantly, when multiple batteries are connected in series/parallel to form a battery module, the insulating film can prevent short circuits between adjacent batteries. When wrapping the battery with an insulating layer, a circular wrapping method is usually adopted. However, this wrapping method produces a large repeated coverage area on the bottom or side of the battery. In addition, in order to facilitate connection, the batteries are connected with a glue layer, resulting in poor heat dissipation effect of the battery module.

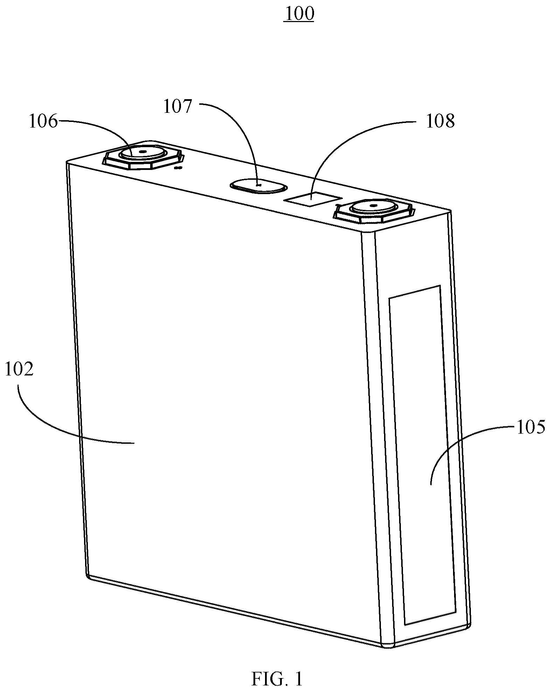

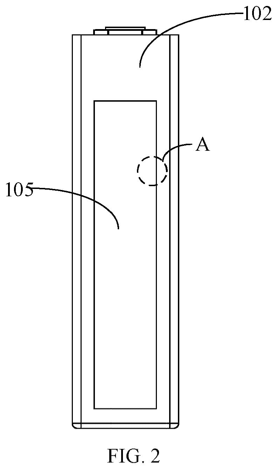

In view of this, the present application proposes a battery module. FIGs. 1 to 4 are schematic structural diagrams of the battery module according to some embodiments of the present application. The battery module will be described in detail below in conjunction with the drawings.

Please refer to FIGs. 1 to 3. The battery module includes a plurality of batteries 100 and a structural adhesive. Each battery 100 includes a battery cell 101 and an insulating layer 102. The insulating layer 102 is arranged on a surface of the battery cell 101. At least one opening 105 is formed on the insulating layer 102. The thickness of the insulating layer 102 in the opening 105 is less than the thickness of other parts of the insulating layer 102. The structural adhesive is arranged on the surface of the battery cell 101. The structural adhesive is located in the opening 105. Any two adjacent batteries 100 are connected by the structural adhesive.

In the technical solutions of the present application, an insulating layer 102 is provided on the surface of the battery cell 101. The insulating layer 102 is used to protect the battery cell 101 and prevent two adjacent battery cells 101 from contacting each other, thereby preventing the problem of short circuit between adjacent batteries 100. An opening 105 is provided on the insulating layer 102, and a structural adhesive is provided at the opening 105. The structural adhesive is used to connect two batteries 100. The structural adhesive is provided at the opening 105, which can effectively avoid an extra layer of structure in the middle, and the structure of the battery module is simple, the control parameters are reduced, and the bonding stability is improved. The structural adhesive and the insulating layer 102 will not overlap, and a layer of structure is reduced, which can avoid excessive thickness in a local area of the battery module, avoid heat concentration, improve heat dissipation efficiency, and increase the capacity of the battery module.

It should be noted that, in this embodiment, the battery cell 101 includes a cell pack, a housing and an electrode assembly, the electrode assembly is connected to the cell pack, and the electrode assembly and the cell pack are arranged in the housing, and the insulating layer is wrapped on the outer surface of the housing.

In this embodiment, the side surface refers to the side surface of the battery cell 101 (excluding the upper end surface and the lower end surface).

It should be noted that the specific type of the components is not limited, and the component may be a battery 100, a side panel of a case, a cooling plate, or a heat spreader. For example, in some embodiments, the component adjacent to the battery 100 is a battery 100, and two adjacent batteries 100 are connected by structural adhesive. In other embodiments, the component adjacent to the battery 100 is a side panel of a case, and the battery 100 and the side panel of the case are connected by structural adhesive. In other embodiments, the component adjacent to the battery 100 is a heat spreader, and the battery 100 and the heat spreader are connected by structural adhesive.

It should be noted that the specific model of the battery 100 provided in the present application is not limited, and it can be a cylindrical battery, a square battery, or a long blade battery. Just choose according to the actual situation. For the convenience of description, in the following embodiments, the battery 100 is described as a square battery. The square battery has two small side surfaces arranged opposite to each other along its length direction, two large side surfaces arranged opposite to each other along its width direction, and two end surfaces arranged opposite to each other along its height direction. The specific position of the opening 105 is not limited, and it can be set according to the specific layout of the battery module. The opening 105 can be located on the small side surfaces, on the large side surfaces, or on the end surfaces.

In some implementations, the insulating layer 102 includes a first portion 103 and a second portion 104, the second portion 104 is disposed around the opening 105, the first portion 103 is disposed around the second portion 104, and the thickness of the second portion 104 is less than the thickness of the first portion 103. It should be noted that the thickness of the second portion 104 is less than the thickness of the first portion 103, which facilitates the bonding of the structural adhesive.

It should be noted that in order to ensure space utilization and heat dissipation efficiency, the structural adhesive is not overlapped with the insulating layer 102. In the actual production process, due to problems such as processing accuracy, the structural adhesive may overlap the second portion 104. In other embodiments, the structural adhesive may completely overlap the second portion 104, or even overlap a part of the first portion 103.

Specifically, the insulating layer 102 is formed on the surface of the battery cell 101 by coating. During the coating process, the coating is coated layer by layer on the surface of the battery cell 101, thereby accumulating to form the insulating layer 102. A transition (i.e., the second portion 104) is provided at the connection between the insulating layer 102 and the opening 105. Since the coating is in liquid state and has fluidity during the coating process, the function of the transition is to prevent the unsolidified coating from remaining in the opening 105 and occupying the opening 105, which results in the inability to install the structural adhesive. During the coating process, the coating solidifies from liquid to solid state, and the coating applied first solidifies first. As the coating solidifies, less and less coating remains in the transition zone. Therefore, the thickness of the insulating layer 102 at the transition will be smaller, and therefore the thickness of the second portion 104 is smaller than the thickness of the first portion 103. In this embodiment, the thickness of the second portion 104 gradually decreases in the direction from the first portion 103 to the opening 105. On the one hand, it facilitates the solidification of the insulating layer 102, and on the other hand, it prevents the coating of the insulating layer 102 from occupying the opening 105.

Optionally, in this embodiment, the end of the second portion 104 connected to the first portion 103 is defined as a first edge, the end of the second portion 104 adjacent to the opening 105 is defined as a second edge, and the vertical distance from the first edge to the second edge is L1, wherein 0mm < L1 ≤ 2mm. When L1 is 0, the second portion 104 does not exist, and the insulating layer 102 will flow toward the opening 105 and occupy the opening 105 during the coating and molding process due to its own characteristics. Since the thickness of the second portion 104 is gradually reduced, the insulation characteristics and pressure resistance of the second portion 104 are poor. When L1 is greater than 2mm, the size of the second portion 104 is too large, which will cause the pressure resistance and insulation of the entire insulating layer 102 to be reduced, and there are greater safety hazards. Specifically, in this embodiment, L1 may be 0.1mm, 0.2mm, 0.3mm, 0.32mm, 0.36mm, 0.4mm, 0.44mm, 0.45mm, 0.5mm, 0.52mm, 0.8mm, 0.9mm, 1.1mm, 1.2mm, 1.32mm, 1.46mm, 1.55mm, 1.6mm, 1.78mm, 1.9mm, 2mm or other unlisted data.

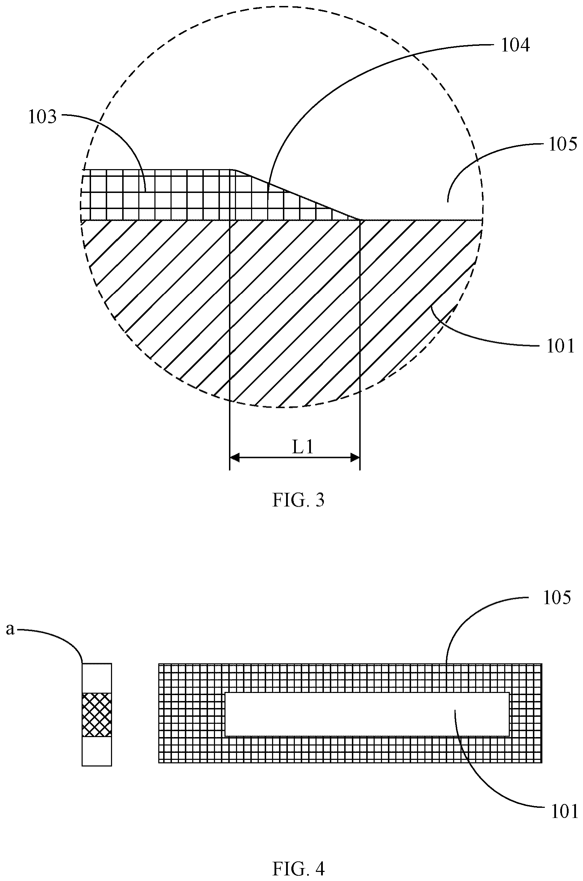

It should be noted that the formation method of the opening 105 is not limited and can be selected according to actual conditions. In some embodiments, the battery cell 101 is placed on the mold, and the surface of the battery cell 101 is scanned by the nozzle a, and the paint is sprayed on the surface of the battery cell 101 to form an insulating layer. During the spraying process, the switch area and switch time of the nozzle a are controlled to perform system calculations to calculate the linear speed of the paint spraying and the required spraying area. As shown in FIG. 4, the nozzle a is located on the left side of the battery cell 101, and the nozzle a is moved from the left to the right. When the nozzle a moves to the right and sprays to the opening area, the nozzle a located on the opening 105 is turned off, and the nozzle a in other areas sprays paint normally, so that a part of the area on the surface of the battery cell 101 is not sprayed (this area is the opening 105). With this arrangement, the insulating layer 102 is formed in one time, saving materials, and it can also avoid post-processing and save processing steps.

In another embodiment, the battery cell 101 is placed on the mold, and the surface of the battery cell 101 is scanned by the nozzle a, and the coating is sprayed on the surface of the battery cell 101 to form an insulating layer. After the spraying is completed, the opening 105 is etched by laser. This method has high processing accuracy and the position of the opening 105 is stable.

In order to ensure the stability of the connection, two openings 105 are provided on the insulating layer 102, and the two openings 105 are respectively formed on the two opposite side surfaces of the battery cell 101. Specifically, in the present embodiment, two openings 105 are provided on each battery 100, and the two openings 105 are respectively located on the two small side surfaces of the battery 100. When the batteries 100 are arranged in the battery module, the small side surfaces of two adjacent batteries 100 are positional correspondence with each other, and a part of the structural adhesive is located in the opening 105 of one of the batteries 100, and the other part is located in the opening 105 of the other battery 100. In this way, the two batteries 100 can be closely abutted, the thickness between the two batteries 100 is reduced, and the local thickness of the battery module is prevented from being too thick, and the capacity of the battery module can also be increased. In some other embodiments, the two openings 105 are respectively formed on the two adjacent side surfaces of the battery cell 101, and specifically, the two openings 105 are respectively located on a large side surface and a small side surface of the battery 100.

Optionally, in some embodiments, the surface area of the opening 105 is S1, and the area of one of the side surfaces of the battery cell 101 is S2, where 0.4 ≤ S1/S2 ≤ 0.8. It should be noted that when S1/S2 is less than 0.4, the area of the opening 105 is small, resulting in a decrease in the size of the structural adhesive, and the stability of the connection between the two batteries 100 is reduced. When S1/S2 is greater than 0.8, the area of the opening 105 increases, resulting in a decrease in the area of the insulating layer 102, and a decrease in insulation and pressure resistance.

Specifically, the shape of the opening 105 is not limited, and may be circular, oval, square, rectangular or irregular, and can be selected according to actual conditions. In this embodiment, the shape of the opening 105 is rectangular or square, which is convenient for receiving the structural adhesive.

In some embodiments, to ensure tightness of the connection, the maximum thickness of the structural adhesive is greater than the maximum thickness of the insulating layer 102. When a small side surface of the outermost battery 100 does not need to be connected to another battery 100, the thickness of the structural adhesive is set to be equal to the thickness of the insulating layer 102 in order to ensure space utilization.

In some embodiments, due to the presence of the opening 105, the insulation at the position of the opening 105 is reduced. In order to avoid short-circuiting of two adjacent batteries 100 due to the opening 105, in this embodiment, the structural adhesive is an insulating adhesive, and the dielectric strength of the structural adhesive is greater than or equal to the dielectric strength of the insulating layer 102 to avoid the structural adhesive being punctured.

It should be noted that the arrangement of the insulating layer 102 is not limited. In some embodiments, the insulating layer 102 is formed on the surface of the battery cell 101 by coating. In order to ensure the insulation of the battery cell 101, the insulating layer 102 is often also coated at the position of the opening 105. The thickness of the insulating layer 102 in the opening 105 is greater than 0. The thickness of the insulating layer 102 here is relatively thin, which is only to improve the insulation of the battery 100. The specific thickness can be set according to actual conditions.

In some other embodiments, in order to ensure the uniformity of the insulating layer 102, a uniform insulating layer 102 is applied to the surface of the battery cell 101 by coating or spraying (i.e., the insulating layer 102 covers the entire surface of the battery cell), and then, an opening 105 is processed on the insulating layer 102 by laser processing. It should be noted that when laser processing is used, the flow characteristics of the coating do not need to be considered, that is, the insulating layer 102 only has the first portion 103, and the second portion 104 is not provided. Such a configuration can ensure the stability of the formation of the insulating layer 102, so that the thickness of the insulating layer 102 at each location is roughly the same, thereby ensuring the insulation characteristics. In this embodiment, the thickness of the insulating layer 102 in the opening 105 is 0.

In some embodiments, the battery cell 101 is provided with poles 106, an explosion-proof valve 107 and a mark 108, and the insulating layer 102 and the structural adhesive wrap the surface area of the battery cell 101 except for the poles 106, the explosion-proof valve 107 and the mark 108. When the insulating layer 102 is wrapped on the battery cell 101, two first avoidance holes, a second avoidance hole and a third avoidance hole are formed on the insulating layer 102. The two first avoidance holes are used for the poles 106 to pass through, the second avoidance hole is used for the explosion-proof valve 107 to pass through, and the third avoidance hole is used to expose the mark 108. The insulating layer 102 avoids the poles 106, the explosion-proof valve 107 and the mark 108 respectively, so that the end surface of the insulating layer 102 and the battery 100 are fitted.

In some embodiments, the specific material of the insulating layer 102 is not limited and can be selected according to actual conditions, and may be PP (polypropylene) or PE (and polycarbonate).

In addition, the present application also proposes an electrical apparatus, which includes a battery module. The specific structure of the battery module refers to the above embodiment. Since the present electrical apparatus adopts all the technical solutions of all the above embodiments, it at least has all the beneficial effects brought by the technical solutions of the above embodiments, which will not be repeated here.

It is understood that electrical apparatus includes but is not limited to electric toys, electric tools, battery cars, cars, ships, spacecraft, etc. Electric toys may include fixed or mobile electric toys, such as game consoles, electric car toys, electric ship toys and electric airplane toys, etc. Spacecraft may include airplanes, rockets, space shuttles and spacecrafts, etc. Cars may be fuel cars, gas cars and new energy cars.

### Embodiment 2

The present application proposes a battery 100, which includes a battery cell 101 and an insulating layer 102. The insulating layer 102 is disposed on a surface of the battery cell 101. At least one opening 105 is formed on the insulating layer 102. The opening 105 is used to accommodate structural adhesive.

In the technical solutions of the present application, an insulating layer 102 is provided on the surface of the battery cell 101. The insulating layer 102 is used to protect the battery cell 101 and prevent two adjacent battery cells 101 from contacting each other, thereby preventing the problem of short circuit between adjacent batteries 100. An opening 105 is provided on the insulating layer 102, and a structural adhesive is provided at the opening 105. The structural adhesive is used to connect two batteries 100. The structural adhesive is provided at the opening 105, which can effectively avoid an extra layer of structure in the middle, and the structure of the battery module is simple, the control parameters are reduced, and the bonding stability is improved. The structural adhesive and the insulating layer 102 will not overlap, and a layer of structure is reduced, which can avoid excessive thickness in a local area of the battery module, avoid heat concentration, improve heat dissipation efficiency, and increase the capacity of the battery module.

The specific structure of the battery 100 may be referred to in Embodiment 1, and will not be described in detail here.

The present application also proposes a battery module, which includes the above-mentioned battery 100. The specific structure of the battery 100 refers to the above-mentioned embodiment. Since the present battery module adopts all the technical solutions of all the above-mentioned embodiments, it has at least all the beneficial effects brought by the technical solutions of the above-mentioned embodiments, which will not be repeated here.

In addition, the present application also proposes an electrical apparatus, which includes a battery module. The specific structure of the battery module refers to the above embodiment. Since the present electrical apparatus adopts all the technical solutions of all the above embodiments, it at least has all the beneficial effects brought by the technical solutions of the above embodiments, which will not be repeated here.

It is understood that electrical apparatus includes but is not limited to electric toys, electric tools, battery cars, cars, ships, spacecraft, etc. Electric toys may include fixed or mobile electric toys, such as game consoles, electric car toys, electric ship toys and electric airplane toys, etc. Spacecraft may include airplanes, rockets, space shuttles and spacecrafts, etc. Cars may be fuel cars, gas cars and new energy cars.

## Claims

1. A battery module, comprising:
a plurality of batteries (100), each comprising a battery cell (101) and an insulating layer (102), wherein the insulating layer (102) is arranged on a side of the battery cell (101), one or more openings (105) are formed in the insulating layer (102), and the insulating layer (102) in the one or more openings (105) is less in thickness than other parts of the insulating layer (102); and
a structural adhesive, arranged on a surface of the battery cell (101) of each of the plurality of batteries, and at least partly located in the one or more openings (105), wherein the battery (100) and a component adjacent to the battery (100) are connected by the structural adhesive.

2. The battery module according to claim 1, wherein the insulating layer (102) comprises a first portion (103) and a second portion (104), wherein the second portion (104) is arranged around the one or more opening portions (105), the first portion (103) is arranged around the second portion (104), and the second portion (104) is less in thickness than the first portion (103).

3. The battery module according to claim 2, wherein the structural adhesive does not overlap with the insulating layer (102); or
the structural adhesive overlaps with a portion of the second portion (104); or
the structural adhesive overlaps with the second portion (104), and overlaps with a portion of the first portion (103).

4. The battery module according to claim 2, wherein the thickness of the second portion (104) gradually decreases in a direction from the first portion (103) to each of the one or more opening portions (105).

5. The battery module according to claim 4, wherein the second portion (104) has a first edge connected to the first portion (103), and a second edge adjacent to the opening (105), and wherein a vertical distance from the first edge to the second edge is L1, where 0mm < L1 ≤ 2mm.

6. The battery module according to any one of claims 1 to 5, wherein the component comprises any one of a case, a cooling plate, a heat spreader or an adjacent one of the plurality of batteries.

7. The battery module according to any one of claims 1 to 5, wherein the openings (105) formed on the insulating layer (102) are two in number, and the two openings (105) are arranged at two opposite sides and/or two adjacent sides of the battery cell (101).

8. The battery module according to any one of claims 1 to 5, wherein a surface area of each of the one or more opening (105) is defined as S1, a surface area of the side of the insulating layer (102) where the opening (105) is arranged is defined as S2, where 0.4 ≤ S1/S2 ≤ 0.8.

9. The battery module according to any one of claims 1 to 5, wherein a maximum thickness of the structural adhesive is greater than or equal to a maximum thickness of the insulating layer (102); and/or
a dielectric strength of the structural adhesive is greater than or equal to a dielectric strength of the insulating layer (102).

10. The battery module according to any one of claims 1 to 5, wherein the structural adhesive comprises an insulating adhesive.

11. The battery module according to any one of claims 1 to 5, wherein the insulating layer (102) is formed on the side of the battery cell (101) by a spraying process.

12. The battery module according to claim 11, wherein the thickness of the insulating layer (102) in the opening (105) is greater than 0.

13. The battery module according to any one of claims 1 to 5, wherein the one or more openings (105) are formed in the insulating layer (102) by laser processing.

14. The battery module according to claim 13, wherein the thickness of the insulating layer (102) in the one or more openings (105) is 0.

15. The battery module according to any one of claims 1 to 5, wherein the battery cell (101) is provided with poles (106), an explosion-proof valve (107) and a mark (108), and the insulating layer (102) and the structural adhesive cover a surface area of the battery cell (101) where the poles (106), the explosion-proof valve (107) and the code (108) are not located.

16. The battery module according to any one of claims 1 to 5, wherein each of the one or more openings (105) has a shape that comprises at least one of a circle, an ellipse, a square and a rectangle.

17. The battery module according to any one of claims 1 to 5, wherein a material of the insulating layer (102) comprises any one of PP and PE.

18. A battery (100), comprising a battery cell (101) and an insulating layer (102), wherein the insulating layer (102) is arranged on a side of the battery cell (101), and one or more openings (105) are formed in the insulating layer (102), wherein the one or more openings (105) are configured to receive a structural adhesive.

19. The battery (100) according to claim 18, wherein the battery cell (101) comprises a cell pack, a housing and an electrode assembly, wherein the electrode assembly is connected to the cell pack, the cell pack and the electrode assembly are arranged in the housing, and the insulating layer (102) is coated on an outer surface of the housing.

20. An electrical apparatus, comprising the battery module according to any one of claims 1 to 17 or the battery (100) according to claim 18 or 19.
